# EUROPEAN PATENT APPLICATION

(11) **EP 4 656 430 A1**
(43) Date of publication of application: **03.12.2025**
(21) Application number: 24890034.2
(22) Date of filing: 27.05.2024
(51) Int. Cl.: B60K 6/26, B60K 6/24, B60K 6/36, B60K 6/365, B60K 6/38, B60K 6/50, B60W 20/10, B60W 20/15, B60W 20/40, B60W 10/08, B60W 10/06, B60W 10/02, B60W 10/12, B60W 30/182

(54) **HYBRID POWER SYSTEM AND VEHICLE**

(30) Priority: 15.11.2023 CN 202311543734
(71) Applicant: Chery Automobile Co., Ltd., Wuhu, Anhui 241006 (CN)
(72) Inventor: ZHANG, Hengxian, Wuhu, Anhui 241006 (CN); ZOU, Junwu, Wuhu, Anhui 241006 (CN); LI, Shuangluan, Wuhu, Anhui 241006 (CN); YAO, Wangfei, Wuhu, Anhui 241006 (CN)
(74) Representative: Yang, Shu
(86) International application number: PCT/CN2024/095578
(87) International publication number: WO 2025/102664

(57) **Abstract**

A hybrid power system and a vehicle. The hybrid power system comprises a first motor (1), a second motor (2), an engine (3), a differential (4), a wheel transmission assembly (5), a first planetary gear transmission assembly (6), a second planetary gear transmission assembly (7), a driving assembly (8) and a controller. The controller changes the transmission mode by controlling the first motor (1), the second motor (2), the engine (3), the differential (4) and the driving assembly (8), so as to adjust the rotation speed of wheels (100) of a vehicle, thereby satisfying different requirements of the vehicle in various working conditions.

## Description

This application claims priority to Chinese Patent Application No. 202311543734.X, filed on November 15, 2023, and entitled "HYBRID POWER SYSTEM AND VEHICLE", the contents of which are incorporated herein by reference in its entirety.

### TECHNICAL FIELD

The present disclosure relates to the field of vehicle technology, and in particular to a hybrid power system and a vehicle.

### BACKGROUND

In current hybrid vehicles, the hybrid power systems significantly improve the power performance and fuel economy of the entire vehicle and reduce emissions, thus being widely favored by people.

The hybrid power systems are mostly developed based on traditional automatic transmissions, with motors and engines simply integrated at the front or rear end of the transmission.

Although the above-mentioned hybrid power systems realize power transmission, due to the simple structure and low transmission efficiency, the working mode of the vehicle is relatively single, which cannot meet the different needs of the vehicle under various working conditions.

### SUMMARY

Embodiments of the present disclosure provide a hybrid power system and a vehicle, which meet the different needs of the vehicle under various working conditions. The technical solutions are as follows.

On one hand, some embodiments of the present disclosure provide a hybrid power system, which includes a first motor, a second motor, an engine, a differential, a wheel transmission assembly, a first planetary-gear transmission assembly, a second planetary-gear transmission assembly, a drive assembly, and a controller.
the wheel transmission assembly is in transmission connection with an input shaft of the differential, and an output shaft of the differential is configured for being in transmission connection with wheels of a vehicle;
the first planetary-gear transmission assembly is in transmission connection with the wheel transmission assembly;
the second planetary-gear transmission assembly is in transmission connection with the second motor, the engine, and the first planetary-gear transmission assembly;
the drive assembly is connected to the first motor, the wheel transmission assembly, the first planetary-gear transmission assembly, and a braking end; and
the controller is electrically connected to the first motor, the second motor, the engine, the differential, and the drive assembly.

In some embodiments, the wheel transmission assembly includes a first gear, a second gear, and a third gear, the first gear is matched with an output shaft of the first motor and meshed with the second gear, the second gear is coaxially connected to the third gear, and the third gear is meshed with an input shaft of the differential;
the first planetary-gear transmission assembly includes a first sun gear, a first planetary gear set, a first planet carrier, and a first ring gear, the first sun gear, the first planet carrier, and the first gear are all coaxially connected, the first planetary gear set is matched with the first planet carrier and meshed with the first sun gear, and the first ring gear is configured for being matched with the braking end;
the second planetary-gear transmission assembly includes a second sun gear, a second planetary gear set, a second planet carrier, and a second ring gear, the second sun gear is coaxially connected to an output shaft of the second motor and meshed with the second planetary gear set, the second planetary gear set is coaxially connected to the second planet carrier, the second planet carrier is coaxially connected to an output shaft of the engine, and the second ring gear is meshed with the second planetary gear set and coaxially connected to the first planetary gear set;
the drive assembly includes a first clutch, a second clutch, and a third clutch, the first clutch is configured to engage or disengage the first gear with/from the output shaft of the first motor, the second clutch is configured to engage or disengage the first planetary gear set with/from the first planet carrier, and the third clutch is configured to engage or disengage the first ring gear with/from the braking end; and
the controller is electrically connected to the first clutch, the second clutch, and the third clutch.

In some embodiments, the controller is configured to: in a case where the vehicle is in a start-up mode or a low-speed driving mode and a speed of the vehicle is lower than a first speed threshold, control the first motor to work, control the second motor and the engine to stop working, control the first clutch to engage, and control the second clutch and the third clutch to disengage, so that the first motor drives the wheels of the vehicle to rotate.

In some embodiments, the controller is configured to: in a case where the vehicle is in a start-up mode or a low-speed driving mode and a speed of the vehicle is not lower than the first speed threshold and lower than a second speed threshold, control the first motor and the second motor to work, control the engine to stop working, control the first clutch and the second clutch to engage, and control the third clutch to disengage, so that the first motor and the second motor jointly drive the wheels of the vehicle to rotate.

In some embodiments, the controller is configured to: in a case where the vehicle is in a start-up mode or a low-speed driving mode and a speed of the vehicle is not lower than the second speed threshold and lower than a third speed threshold, control the first motor and the second motor to work, control the engine to stop working, control the first clutch and the third clutch to engage, and control the second clutch to disengage, so that the first motor and the second motor jointly drive the wheels of the vehicle to rotate.

In some embodiments, the controller is configured to: in a case where the vehicle is in a medium-speed driving mode or a high-speed driving mode and a speed of the vehicle is not lower than the third speed threshold and lower than a fourth speed threshold, control the first motor, the second motor, and the engine to work, control the first clutch and the second clutch to engage, and control the third clutch to disengage, so that the first motor, the second motor, and the engine jointly drive the wheels of the vehicle to rotate.

In some embodiments, the controller is configured to: in a case where the vehicle is in a medium-speed driving mode or a high-speed driving mode and a speed of the vehicle is not lower than the fourth speed threshold and lower than a fifth speed threshold, control the first motor, the second motor, and the engine to work, control the first clutch and the third clutch to engage, and control the second clutch to disengage, so that the first motor, the second motor, and the engine jointly drive the wheels of the vehicle to rotate.

In some embodiments, the controller is configured to: in a case where the vehicle is in a coasting mode or a braking energy recovery mode, control the first motor, the second motor, and the engine to stop working, control the first clutch to engage, and control the second clutch and the third clutch to disengage, so as to recover energy through the first motor.

In some embodiments, the controller is configured to: in a case where the vehicle is in a coasting mode or a braking energy recovery mode, control the first motor, the second motor, and the engine to stop working, control the first clutch and the second clutch to engage, and control the third clutch to disengage, so as to recover energy through the first motor and the second motor.

In some embodiments, the hybrid power system further includes a power battery, a first inverter, and a second inverter. The power battery is electrically connected to the first inverter and the second inverter, the first inverter is electrically connected to the first motor and the controller, and the second inverter is electrically connected to the second motor and the controller.

On the other hand, some embodiments of the present disclosure provide a vehicle, which includes the hybrid power system according to any one of the above embodiments.

The beneficial effects brought by the technical solutions in the embodiments of the present disclosure at least include the following.

The embodiments of the present disclosure provide a hybrid power system. The controller changes the transmission mode by controlling the first motor, the second motor, the engine, the differential, and the drive assembly, thereby adjusting the rotational speed of the wheels of the vehicle to meet the different needs of the vehicle under various working conditions.

It should be understood that the above general description and the following detailed description are only exemplary and explanatory, and cannot limit the present disclosure.

### BRIEF DESCRIPTION OF THE DRAWINGS

To describe technical solutions in the embodiments of the present disclosure more clearly, the following briefly introduces the accompanying drawings required for describing the embodiments. Apparently, the accompanying drawings in the following description illustrate merely some embodiments of the present disclosure, and a person of ordinary skill in the art may still derive other drawings from these accompanying drawings without creative efforts.
Fig. 1 is a structural schematic diagram of a hybrid power system according to some embodiments of the present disclosure;
Fig. 2 is a transmission schematic diagram of a hybrid power system in a pure electric single-motor 10-speed driving mode according to some embodiments of the present disclosure;
Fig. 3 is a transmission schematic diagram of a hybrid power system in a pure electric dual-motor 11-speed driving mode according to some embodiments of the present disclosure;
Fig. 4 is a transmission schematic diagram of a hybrid power system in a pure electric dual-motor 12-speed driving mode according to some embodiments of the present disclosure;
Fig. 5 is a transmission schematic diagram of a hybrid power system in a parallel hybrid 11-speed driving mode according to some embodiments of the present disclosure;
Fig. 6 is a transmission schematic diagram of a hybrid power system in a parallel hybrid energy recovery mode according to some embodiments of the present disclosure;
Fig. 7 is a transmission schematic diagram of a hybrid power system in a parallel hybrid 12-speed driving mode according to some embodiments of the present disclosure;
Fig. 8 is a transmission schematic diagram of a hybrid power system in a parallel hybrid energy recovery mode according to some embodiments of the present disclosure; and
Fig. 9 is a transmission schematic diagram of a hybrid power system in an energy recovery mode according to some embodiments of the present disclosure.

References:
1-First motor; 2- Second motor; 3-Engine; 4-Differential; 5-Wheel transmission assembly; 6-First planetary-gear transmission assembly; 7-Second planetary-gear transmission assembly; 8-Drive assembly; 9-Power battery; 10-First inverter; 11-Second inverter;
51-First gear; 52-Second gear; 53-Third gear;
61-First sun gear; 62-First planetary gear set; 63-First planet carrier; 64-First ring gear;
71-Second sun gear; 72-Second planetary gear set; 73-Second planet carrier; 74-Second ring gear;
81-First clutch; 82-Second clutch; 83-Third clutch;
100-Wheel; 200-Braking end.

### DETAILED DESCRIPTION

To make the technical solutions and advantages of the present disclosure clearer, the embodiments of the present disclosure will be described in further detail below with reference to the accompanying drawings.

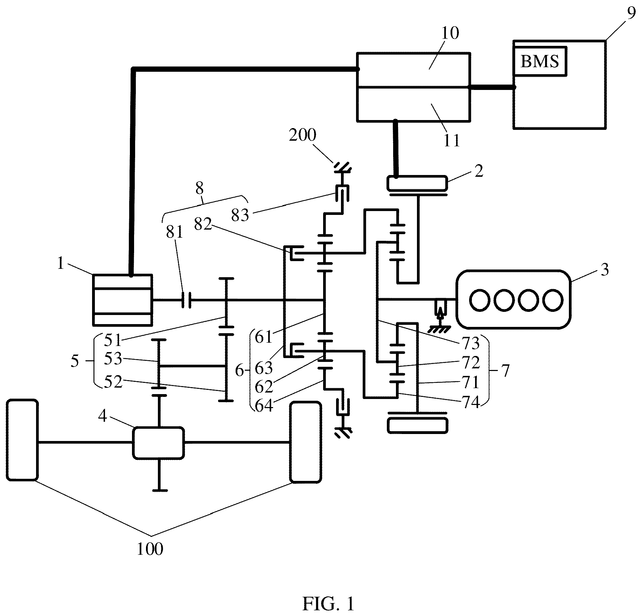

Some embodiments of the present disclosure provide a hybrid power system. As shown in Fig. 1, the hybrid power system includes a first motor 1, a second motor 2, an engine 3, a differential 4, a wheel transmission assembly 5, a first planetary-gear transmission assembly 6, a second planetary-gear transmission assembly 7, a drive assembly 8, and a controller (not shown in the figure).

Among them, the first motor 1, the second motor 2, and the engine 3 are all capable of driving the wheels 100 of the vehicle to rotate, providing output torque for the rotation of the wheels 100.

The wheel transmission assembly 5 is in transmission connection with the input shaft of the differential 4, and the output shaft of the differential 4 is used for transmission connection with the wheels 100 of the vehicle. The first planetary-gear transmission assembly 6 is in transmission connection with the wheel transmission assembly 5. The second planetary-gear transmission assembly 7 is in transmission connection with the second motor 2, the engine 3, and the first planetary-gear transmission assembly 6. The drive assembly 8 is connected to the first motor 1, the wheel transmission assembly 5, the first planetary-gear transmission assembly 6, and the braking end 200. The controller is electrically connected to the first motor 1, the second motor 2, the engine 3, the differential 4, and the drive assembly 8.

The controller controls whether the first motor 1, the second motor 2, and the engine 3 work, and controls the working states of the differential 4 and the drive assembly 8 to realize the transmission connection between the first motor 1, the second motor 2, the engine 3, and the input shaft of the differential 4, so as to transmit different driving forces to the wheels 100 with different transmission ratios, which realizes different driving modes of the hybrid power system, thereby meeting the different needs of the vehicle under various working conditions.

Next, the structures of the wheel transmission assembly 5, the first planetary-gear transmission assembly 6, the second planetary-gear transmission assembly 7, and the drive assembly 8 in the hybrid power system are introduced in more detail as follows.

As shown in Fig. 1, the wheel transmission assembly 5 includes a first gear 51, a second gear 52, and a third gear 53. The first gear 51 is matched with the output shaft of the first motor 1 and meshed with the second gear 52. The second gear 52 is coaxially connected to the third gear 53. The third gear 53 is meshed with the input shaft of the differential 4, and the output shaft of the differential 4 is used for transmission connection with the wheels 100 of the vehicle.

It can be understood that "matched" in the embodiments of the present disclosure means that coaxial connection or non-coaxial connection can be realized through the drive assembly 8 introduced later.

It can be understood that the coaxial connection in the embodiments of the present disclosure can realize rotation in the same direction at the same speed or stop rotation at the same time. For example, the second gear 52 is coaxially connected to the third gear 53, that is, when the second gear 52 rotates, the second gear 52 drives the third gear 53 to rotate in the same direction at the same speed, and when the second gear 52 stops rotating, the third gear 53 also stops rotating at the same time.

The wheel transmission assembly 5 makes the transmission connection between the wheels 100 and the output shaft of the first motor 1, the output shaft of the second motor 2, and the output shaft of the engine 3 through various devices, so that the first motor 1, the second motor 2, and the engine 3 drive the wheels 100 to rotate through the wheel transmission assembly 5.

The first planetary-gear transmission assembly 6 includes a first sun gear 61, a first planetary gear set 62, a first planet carrier 63, and a first ring gear 64. The first sun gear 61, the first planet carrier 63, and the first gear 51 are all coaxially connected. The first planetary gear set 62 is matched with the first planet carrier 63 and meshed with the first sun gear 61. The first ring gear 64 is used for matching with the braking end 200.

Among them, the braking end 200 is any non-rotatable device on the vehicle, for example, it can be any position of the frame, etc., which is not limited in the embodiments of the present disclosure.

The second planetary-gear transmission assembly 7 includes a second sun gear 71, a second planetary gear set 72, a second planet carrier 73, and a second ring gear 74. The second sun gear 71 is coaxially connected to the output shaft of the second motor 2 and meshed with the second planetary gear set 72. The second planetary gear set 72 is coaxially connected to the second planet carrier 73. The second planet carrier 73 is coaxially connected to the output shaft of the engine 3. The second ring gear 74 is meshed with the second planetary gear set 72 and coaxially connected to the first planetary gear set 62.

The first planetary-gear transmission assembly 6 and the second planetary-gear transmission assembly 7 make the transmission connection between the wheel transmission assembly 5 and the output shaft of the second motor 2 and the output shaft of the engine 3, that is, both the second motor 2 and the engine 3 drive the wheels 100 to rotate through the first planetary-gear transmission assembly 6, the second planetary-gear transmission assembly 7, and the wheel transmission assembly 5.

The drive assembly 8 includes a first clutch 81, a second clutch 82, and a third clutch 83. The first clutch 81 is used for engaging or disengaging the first gear 51 with/from the output shaft of the first motor 1. The second clutch 82 is used for engaging or disengaging the first planetary gear set 62 with/from the first planet carrier 63. The third clutch 83 is used for engaging or disengaging the first ring gear 64 with/from the braking end 200.

The drive assembly 8 realizes different driving modes of the hybrid power system through its different states, so as to meet the different needs of the vehicle under various working conditions.

When the first clutch 81 is engaged, the first gear 51 is coaxially connected to the output shaft of the first motor 1. When the first clutch 81 is disengaged, the first gear 51 is not coaxially connected to the output shaft of the first motor 1, that is, the rotation of the first gear 51 does not drive the output shaft of the first motor 1 to rotate, and the rotation of the output shaft of the first motor 1 does not drive the first gear 51 to rotate.

When the second clutch 82 is engaged, the first planetary gear set 62 is coaxially connected to the first planet carrier 63. Since the first planet carrier 63 is coaxially connected to the first gear 51 and the first sun gear 61, the first planetary gear set 62 is coaxially connected to the first planet carrier 63, the first gear 51, and the first sun gear 61. When the second clutch 82 is disengaged, the first planetary gear set 62 is not coaxially connected to the first planet carrier 63.

When the third clutch 83 is engaged, the first ring gear 64 is coaxially connected to the braking end 200. Since the braking end 200 cannot rotate, the first ring gear 64 will not rotate. When the third clutch 83 is disengaged, the first ring gear 64 is not coaxially connected to the braking end 200, and at this time, the first ring gear 64 can rotate.

The controller is electrically connected to the first motor 1, the second motor 2, the engine 3, the differential 4, the first clutch 81, the second clutch 82, and the third clutch 83. The controller can control the states of the first motor 1, the second motor 2, the engine 3, the differential 4, the first clutch 81, the second clutch 82, and the third clutch 83 to realize different driving modes of the hybrid power system, thereby realizing different rotational speeds of the wheels 100 and further meeting the different speed needs of the vehicle under various working conditions.

In some embodiments, the hybrid power system further includes a power battery 9, a first inverter 10, and a second inverter 11. The power battery 9 is electrically connected to the first inverter 10 and the second inverter 11. The first inverter 10 is electrically connected to the first motor 1 and the controller. The second inverter 11 is electrically connected to the second motor 2 and the controller.

In this way, when it is necessary to control the first motor 1 to work, the controller controls the first inverter 10 to convert the alternating current output by the power battery 9 into direct current to supply power to the first motor 1, so that the first motor 1 starts to work. When it is necessary to control the second motor 2 to work, the controller controls the second inverter 11 to convert the alternating current output by the power battery 9 into direct current to supply power to the second motor 2, so that the second motor 2 starts to work.

Several of the driving modes that can be realized by the hybrid power system in the embodiments of the present disclosure are introduced as follows.

### 1. Pure electric single-motor 10-speed driving mode

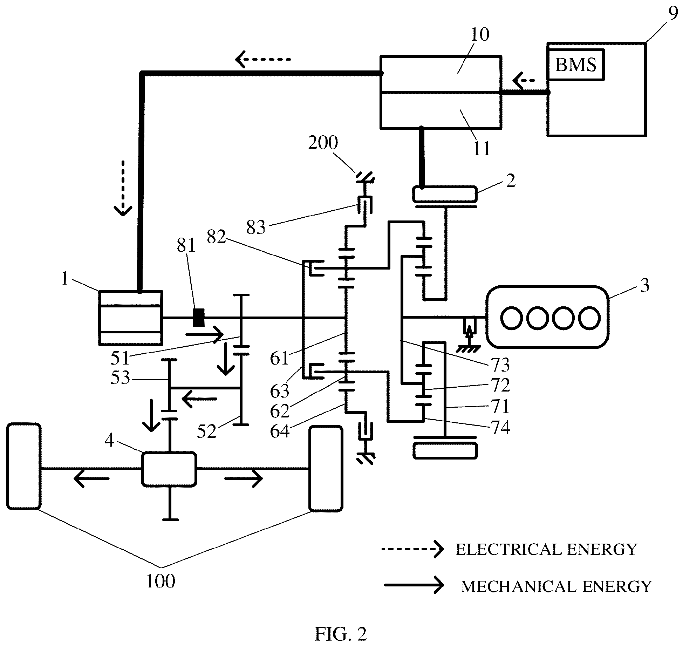

As shown in Fig. 2, the controller is configured to: when the vehicle is in the start-up mode or low-speed driving mode, if the speed of the vehicle is lower than the first speed threshold, control the first motor 1 to work, control the second motor 2 and the engine 3 to stop working, control the first clutch 81 to engage, and control the second clutch 82 and the third clutch 83 to disengage, so that the first motor 1 drives the wheels 100 of the vehicle to rotate.

In implementation, after the controller controls the first motor 1 to work, controls the second motor 2 and the engine 3 to stop working, controls the first clutch 81 to engage, and controls the second clutch 82 and the third clutch 83 to disengage, referring to the dashed arrow in Fig. 2, the power battery 9 starts to supply power to the first motor 1 through the first inverter 10.

Then, referring to the solid arrow in Fig. 2, after the first motor 1 is powered on, the output shaft of the first motor 1 drives the first gear 51 to rotate, and the first gear 51 sequentially drives the second gear 52, the third gear 53, the differential 4, and the wheels 100 to rotate, thereby realizing the pure electric single-motor driving mode.

The first speed threshold may be any reasonable value, which is set according to requirements and the actual situation of the vehicle, and is not limited in the embodiments of the present disclosure.

### 2. Pure electric dual-motor 11-speed driving mode

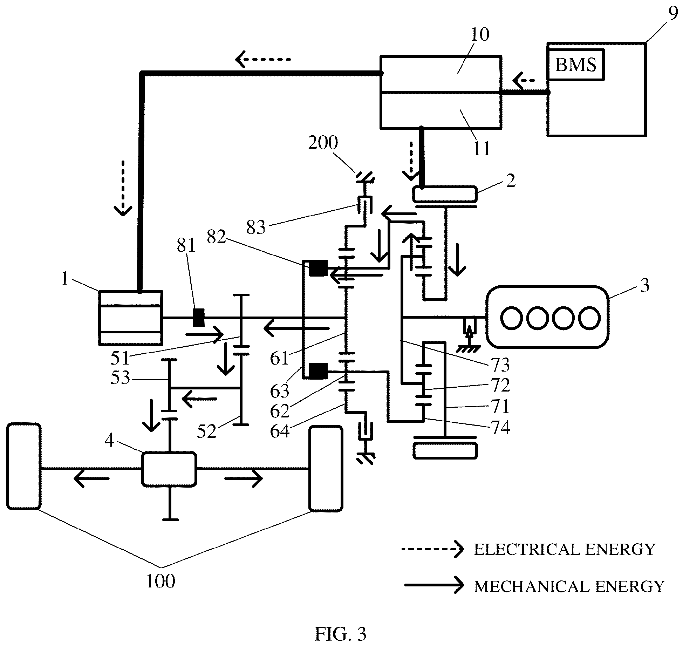

As shown in Fig. 3, the controller is configured to: when the vehicle is in the start-up mode or low-speed driving mode, if the speed is not lower than the first speed threshold and lower than the second speed threshold, control the first motor 1 and the second motor 2 to work, control the engine 3 to stop working, control the first clutch 81 and the second clutch 82 to engage, and control the third clutch 83 to disengage, so that the first motor 1 and the second motor 2 jointly drive the wheels 100 of the vehicle to rotate.

In implementation, after the controller controls the first motor 1 and the second motor 2 to work, controls the engine 3 to stop working, controls the first clutch 81 and the second clutch 82 to engage, and controls the third clutch 83 to disengage, referring to the dashed arrow in Fig. 3, the power battery 9 starts to supply power to the first motor 1 through the first inverter 10 and to the second motor 2 through the second inverter 11.

Then, referring to the solid arrow in Fig. 3, on the one hand, after the first motor 1 is powered on, the output shaft of the first motor 1 drives the first gear 51 to rotate, and the first gear 51 sequentially drives the second gear 52, the third gear 53, the differential 4, and the wheels 100 to rotate, thereby realizing the driving of the first motor 1. On the other hand, after the second motor 2 is powered on, the output shaft of the second motor 2 drives the second sun gear 71 to rotate, and the second sun gear 71 sequentially drives the second planetary gear set 72, the second ring gear 74, the first planetary gear set 62, the first planet carrier 63, the first gear 51, the second gear 52, the third gear 53, the differential 4, and the wheels 100 to rotate, thereby realizing the driving of the second motor 2.

From the above, the first motor 1 and the second motor 2 jointly drive the wheels 100, thereby realizing the pure electric dual-motor 11-speed driving mode, increasing the output torque, and achieving faster driving than the pure electric single-motor 10-speed driving mode.

The second speed threshold may be any reasonable value greater than the first speed threshold, which is set according to requirements and the actual situation of the vehicle, and is not limited in the embodiments of the present disclosure.

It should be noted that in the above process, the second ring gear 74, the first planetary gear set 62, and the first planet carrier 63 are all coaxially connected to achieve the same rotational speed.

### 3. Pure electric dual-motor 12-speed driving mode

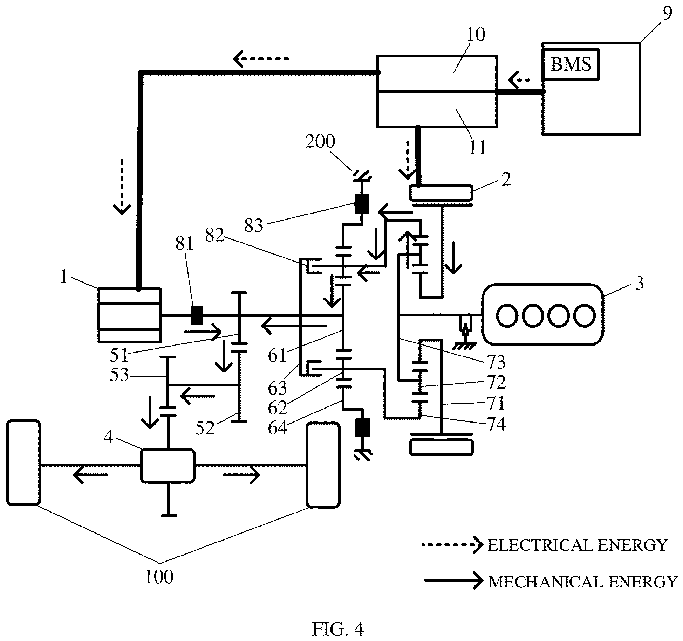

As shown in Fig. 4, the controller is configured to: when the vehicle is in the start-up mode or low-speed driving mode, if the speed is not lower than the second speed threshold and lower than the third speed threshold, control the first motor 1 and the second motor 2 to work, control the engine 3 to stop working, control the first clutch 81 and the third clutch 83 to engage, and control the second clutch 82 to disengage, so that the first motor 1 and the second motor 2 jointly drive the wheels 100 of the vehicle to rotate.

In implementation, after the controller controls the first motor 1 and the second motor 2 to work, controls the engine 3 to stop working, controls the first clutch 81 and the third clutch 83 to engage, and controls the second clutch 82 to disengage, referring to the dashed arrow in Fig. 4, the power battery 9 starts to supply power to the first motor 1 through the first inverter 10 and supply power to the second motor 2 through the second inverter 11.

Then, referring to the solid arrow in Fig. 4, on the one hand, after the first motor 1 is powered on, the output shaft of the first motor 1 drives the first gear 51 to rotate, and the first gear 51 sequentially drives the second gear 52, the third gear 53, the differential 4, and the wheels 100 to rotate, thereby realizing the driving of the first motor 1. On the other hand, after the second motor 2 is powered on, the output shaft of the second motor 2 drives the second sun gear 71 to rotate, and the second sun gear 71 sequentially drives the second planetary gear set 72, the second ring gear 74, and the first planetary gear set 62 to rotate. Since the third clutch 83 is engaged, the first ring gear 64 cannot rotate, so the rotation of the first planetary gear set 62 drives the first sun gear 61 and the first planet carrier 63 to rotate, and the transmission ratio between the second ring gear 74 and the first sun gear 61 is less than 1, that is, the rotational speed of the first sun gear 61 is greater than that of the second ring gear 74, that is, the rotational speed of the first planet carrier 63 is greater than that of the second ring gear 74. Then, the first planet carrier 63 drives the first gear 51, the second gear 52, the third gear 53, the differential 4, and the wheels 100 to rotate, thereby realizing the driving of the second motor 2.

From the above, the first motor 1 and the second motor 2 jointly drive the wheels 100, thereby realizing the pure electric dual-motor 12-speed driving mode, increasing the output torque, and achieving faster driving than the pure electric dual-motor 11-speed driving mode.

The third speed threshold may be any reasonable value greater than the second speed threshold, which is set according to requirements and the actual situation of the vehicle, and is not limited in the embodiments of the present disclosure.

It should be noted that in the above process, since the rotational speed of the first planet carrier 63 is greater than that of the second ring gear 74, the driving rotational speed of the second motor 1 to the wheels 100 can be greater than that of the second motor 2 to the wheels 100 in the pure electric dual-motor 11-speed driving mode, thereby realizing the pure electric dual-motor 12-speed driving mode.

### 4. Parallel hybrid 11-speed driving mode

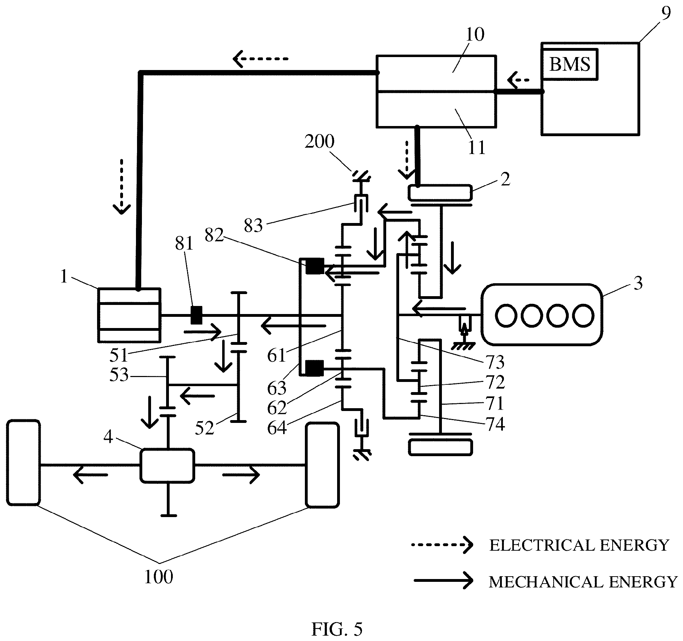

As shown in Fig. 5, the controller is configured to: when the vehicle is in the medium-speed driving mode or high-speed driving mode, if the speed of the vehicle is not lower than the third speed threshold and lower than the fourth speed threshold, control the first motor 1, the second motor 2, and the engine 3 to work, control the first clutch 81 and the second clutch 82 to engage, and control the third clutch 83 to disengage, so that the first motor 1, the second motor 2, and the engine 3 jointly drive the wheels 100 of the vehicle to rotate.

In implementation, after the controller controls the first motor 1, the second motor 2, and the engine 3 to work, controls the first clutch 81 and the second clutch 82 to engage, and controls the third clutch 83 to disengage, referring to the dashed arrow in Fig. 5, the power battery 9 starts to supply power to the first motor 1 through the first inverter 10 and supply power to the second motor 2 through the second inverter 11.

Then, referring to the solid arrow in Fig. 5, on the one hand, after the first motor 1 is powered on, the output shaft of the first motor 1 drives the first gear 51 to rotate, and the first gear 51 sequentially drives the second gear 52, the third gear 53, the differential 4, and the wheels 100 to rotate, thereby realizing the driving of the first motor 1. On the other hand, after the second motor 2 is powered on, the output shaft of the second motor 2 and the output shaft of the engine 3 jointly drive the second sun gear 71 to rotate, and the second sun gear 71 sequentially drives the second planetary gear set 72, the second ring gear 74, the first planetary gear set 62, the first planet carrier 63, the first gear 51, the second gear 52, the third gear 53, the differential 4, and the wheels 100 to rotate, thereby realizing the driving of the second motor 2 and the engine 3.

From the above, the first motor 1, the second motor 2, and the engine 3 jointly drive the wheels 100, thereby realizing the parallel hybrid 11-speed driving mode of the motors (including the first motor 1 and the second motor 2) and the engine 3, increasing the output torque, and achieving faster driving than the pure electric dual-motor 12-speed driving mode.

The fourth speed threshold may be any reasonable value greater than the third speed threshold, which is set according to requirements and the actual situation of the vehicle, and is not limited in the embodiments of the present disclosure.

It should be noted that in the above process, the second ring gear 74, the first planetary gear set 62, and the first planet carrier 63 are all coaxially connected to achieve the same rotational speed.

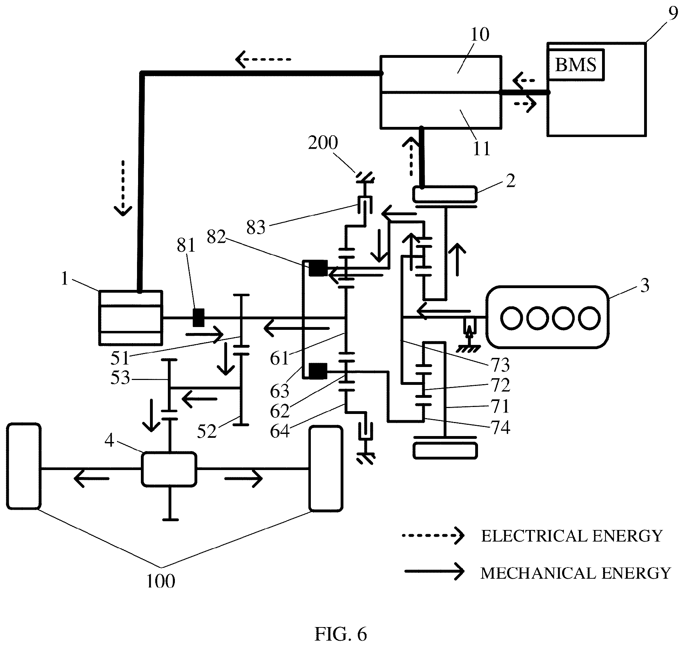

In some embodiments, as shown in Fig. 6, if the required torque of the wheels 100 is low and the first motor 1 and the engine 3 can fully provide the required torque, the driving mode of the vehicle may be: the controller controls the first motor 1 and the engine 3 to work, controls the first clutch 81 and the second clutch 82 to engage, and controls the third clutch 83 to disengage.

In implementation, after the controller controls the first motor 1 and the engine 3 to work, controls the first clutch 81 and the second clutch 82 to engage, and controls the third clutch 83 to disengage, referring to the dashed arrow in Fig. 6, the power battery 9 only supplies power to the first motor 1 through the first inverter 10.

Then, referring to the solid arrow in Fig. 6, on the one hand, after the first motor 1 is powered on, the output shaft of the first motor 1 drives the first gear 51 to rotate, and the first gear 51 sequentially drives the second gear 52, the third gear 53, the differential 4, and the wheels 100 to rotate, thereby realizing the driving of the first motor 1. On the other hand, the output shaft of the engine 3 drives the second sun gear 71 to rotate, and the second sun gear 71 sequentially drives the second planetary gear set 72, the second ring gear 74, the first planetary gear set 62, the first planet carrier 63, the first gear 51, the second gear 52, the third gear 53, the differential 4, and the wheels 100 to rotate, thereby realizing the driving of the engine 3.

When the sum of the output torque of the engine 3 acting on the wheels 100 and the output torque of the first motor 1 acting on the wheels 100 is greater than the required torque of the wheels 100, the excess output torque of the engine 3 is transmitted to the output shaft of the second motor 2 through the second sun gear 71. Referring to the dashed arrow in Fig. 6, the engine 3 transmits the excess mechanical energy to the output shaft of the second motor 2 through the second sun gear 71, so that the second motor 2 converts the received mechanical energy into electrical energy, and the converted electrical energy is used to supply power to the first motor 1 or charge the power battery 9, thereby realizing energy recovery through the second motor 2.

### 5. Parallel hybrid 12-speed driving mode

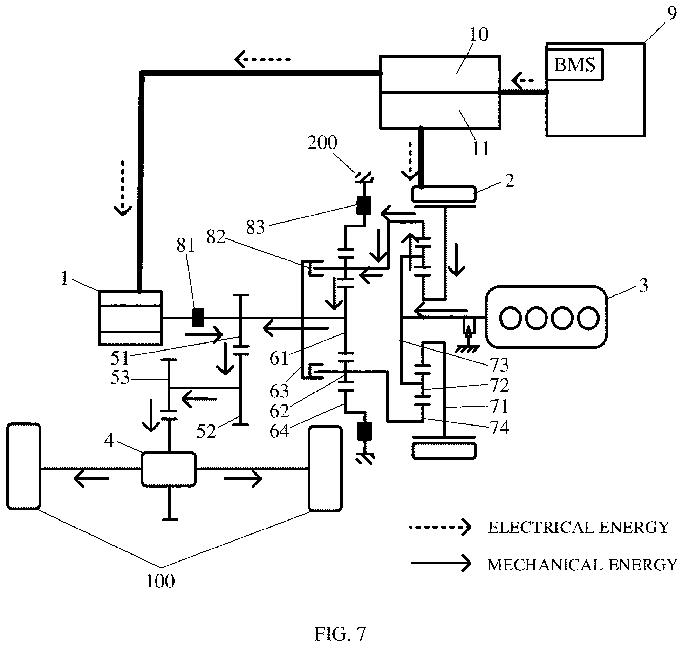

As shown in Fig. 7, the controller is configured to: when the vehicle is in the medium-speed driving mode or high-speed driving mode, if the speed of the vehicle is not lower than the fourth speed threshold and lower than the fifth speed threshold, control the first motor 1, the second motor 2, and the engine 3 to work, control the first clutch 81 and the third clutch 83 to engage, and control the second clutch 82 to disengage, so that the first motor 1, the second motor 2, and the engine 3 jointly drive the wheels 100 of the vehicle to rotate.

In implementation, after the controller controls the first motor 1, the second motor 2, and the engine 3 to work, controls the first clutch 81 and the third clutch 83 to engage, and controls the second clutch 82 to disengage, referring to the dashed arrow in Fig. 7, the power battery 9 starts to supply power to the first motor 1 through the first inverter 10 and to the second motor 2 through the second inverter 11.

Then, referring to the solid arrow in Fig. 7, on the one hand, after the first motor 1 is powered on, the output shaft of the first motor 1 drives the first gear 51 to rotate, and the first gear 51 sequentially drives the second gear 52, the third gear 53, the differential 4, and the wheels 100 to rotate, thereby realizing the driving of the first motor 1. On the other hand, after the second motor 2 is powered on, the output shaft of the second motor 2 and the output shaft of the engine 3 jointly drive the second sun gear 71 to rotate, and the second sun gear 71 sequentially drives the second planetary gear set 72, the second ring gear 74, and the first planetary gear set 62 to rotate. Since the third clutch 83 is engaged, the first ring gear 64 cannot rotate, so the rotation of the first planetary gear set 62 drives the first sun gear 61 and the first planet carrier 63 to rotate, and the transmission ratio between the second ring gear 74 and the first sun gear 61 is less than 1, that is, the rotational speed of the first sun gear 61 is greater than that of the second ring gear 74, that is, the rotational speed of the first planet carrier 63 is greater than that of the second ring gear 74. Then, the first planet carrier 63 drives the first gear 51, the second gear 52, the third gear 53, the differential 4, and the wheels 100 to rotate, thereby realizing the driving of the second motor 2 and the engine 3.

From the above, the first motor 1, the second motor 2, and the engine 3 jointly drive the wheels 100, thereby realizing the parallel hybrid 12-speed driving mode of the motors (including the first motor 1 and the second motor 2) and the engine 3, increasing the output torque, and achieving faster driving than the parallel hybrid 11-speed driving mode.

The fifth speed threshold may be any reasonable value greater than the fourth speed threshold, which is set according to requirements and the actual situation of the vehicle, and is not limited in the embodiments of the present disclosure.

It should be noted that in the above process, since the rotational speed of the first planet carrier 63 is greater than that of the second ring gear 74, the combined driving rotational speed of the second motor 1 and the engine 3 to the wheels 100 is greater than that of the second motor 2 and the engine 3 to the wheels 100 in the parallel hybrid 11-speed driving mode, thereby realizing the parallel hybrid 12-speed driving mode.

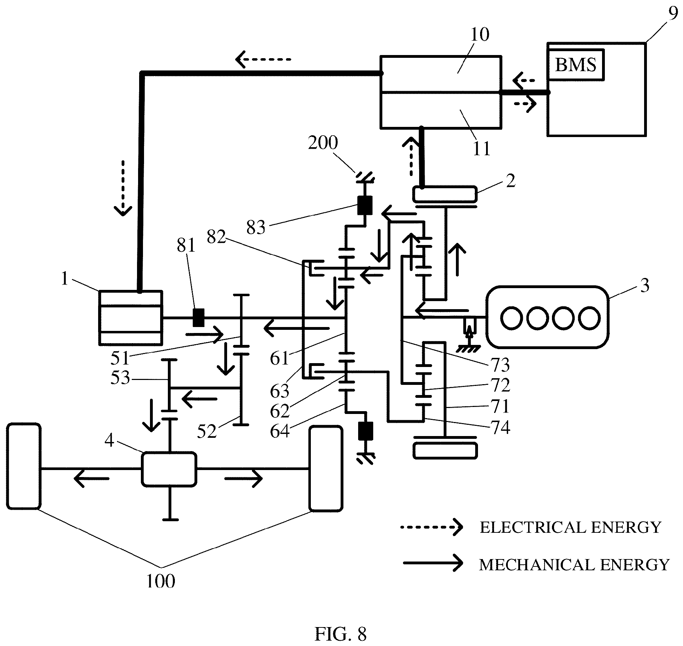

In some embodiments, as shown in Fig. 8, if the required torque of the wheels 100 is low and the first motor 1 and the engine 3 can fully provide the required torque, the driving mode of the vehicle may be: the controller controls the first motor 1 and the engine 3 to work, controls the first clutch 81 and the third clutch 83 to engage, and controls the second clutch 82 to disengage.

In implementation, after the controller controls the first motor 1 and the engine 3 to work, controls the first clutch 81 and the third clutch 83 to engage, and controls the second clutch 82 to disengage, referring to the dashed arrow in Fig. 8, the power battery 9 only supplies power to the first motor 1 through the first inverter 10.

Then, referring to the solid arrow in Fig. 8, on the one hand, after the first motor 1 is powered on, the output shaft of the first motor 1 drives the first gear 51 to rotate, and the first gear 51 sequentially drives the second gear 52, the third gear 53, the differential 4, and the wheels 100 to rotate, thereby realizing the driving of the first motor 1. On the other hand, the output shaft of the engine 3 drives the second sun gear 71 to rotate, and the second sun gear 71 sequentially drives the second planetary gear set 72, the second ring gear 74, and the first planetary gear set 62 to rotate. The rotation of the first planetary gear set 62 drives the first sun gear 61 and the first planet carrier 63 to rotate, and the transmission ratio between the second ring gear 74 and the first sun gear 61 is less than 1. Then, the first planet carrier 63 drives the first gear 51, the second gear 52, the third gear 53, the differential 4, and the wheels 100 to rotate, thereby realizing the driving of the engine 3.

When the sum of the output torque of the engine 3 acting on the wheels 100 and the output torque of the first motor 1 acting on the wheels 100 is greater than the required torque of the wheels 100, the excess output torque of the engine 3 is transmitted to the output shaft of the second motor 2 through the second sun gear 71. Referring to the dashed arrow in Fig. 8, the engine 3 transmits the excess mechanical energy to the output shaft of the second motor 2 through the second sun gear 71, so that the second motor 2 converts the received mechanical energy into electrical energy, and the converted electrical energy is used to supply power to the first motor 1 or charge the power battery 9, thereby realizing energy recovery through the second motor 2.

### 6. Energy recovery mode

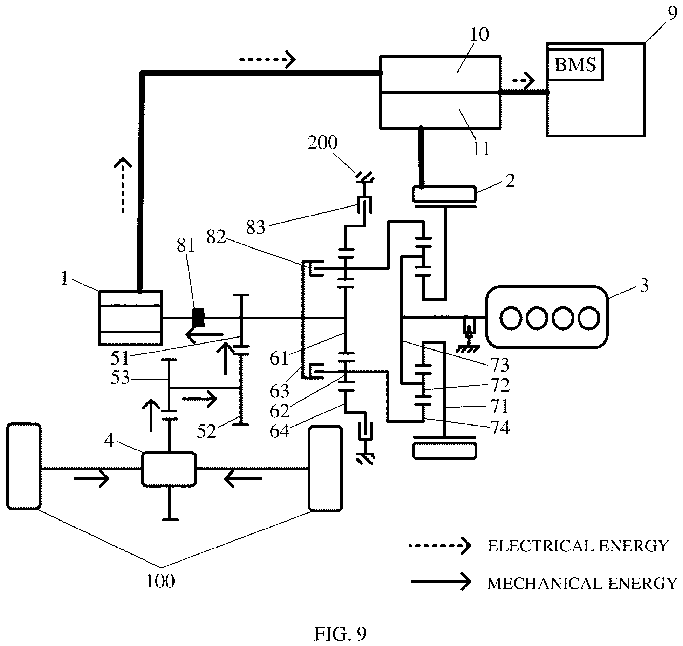

As shown in Fig. 9, the controller is configured to: when the vehicle is in the coasting mode or braking energy recovery mode, control the first motor 1, the second motor 2, and the engine 3 to stop working, control the first clutch 81 to engage, and control the second clutch 82 and the third clutch 83 to disengage, so as to recover energy through the first motor 1.

In implementation, referring to the solid arrow in Fig. 9, when the vehicle is in the coasting mode or braking energy recovery mode, the rotation of the wheels 100 sequentially drives the differential 4, the third gear 53, the second gear 52, the first gear 51, and the output shaft of the first motor 1 to rotate, that is, the wheels 100 transmit mechanical energy to the output shaft of the first motor 1.

Then, referring to the dashed arrow in Fig. 9, the first motor 1 converts the received mechanical energy into electrical energy and transmits it to the power battery 9 through the first inverter 10 to charge the power battery 9, thereby realizing energy recovery through the first motor 1.

In the above parallel hybrid 11-speed driving mode and parallel hybrid 12-speed driving mode, the engine 3 and the second motor 2 realize stepless speed regulation through the second planetary-gear transmission assembly 7, and the rotational speed of the engine 3 is decoupled from the wheels 100, so that the engine 3 works in the high-efficiency range, improving the overall performance of the engine 3.

Moreover, it can be known from the various driving modes introduced above that the hybrid power system in the embodiments of the present disclosure realizes that the vehicle uses the pure electric driving mode in the start-up mode and low-speed driving mode, which not only utilizes the characteristics of the motor's fast response and large low-speed torque to improve power performance, but also avoids the energy loss caused by frequent start-stop of the engine 3, improving fuel efficiency. The hybrid power system in the embodiments of the present disclosure also realizes that the engine 3 is involved in driving in the medium-speed driving mode and high-speed driving mode, so that the engine 3 works in the high-efficiency range, improving the overall performance of the engine 3.

The hybrid power system in the embodiments of the present disclosure has a compact structure and realizes multiple driving modes. The above is only a detailed introduction of several driving modes, and the embodiments of the present disclosure do not specifically limit other driving modes that may be realized by the hybrid power system.

The embodiments of the present disclosure also provide a vehicle. The vehicle includes the hybrid power system according to any one of the above.

The beneficial effects brought by the technical solutions in the embodiments of the present disclosure at least include the following.

The embodiments of the present disclosure provide a hybrid power system. The controller changes the transmission mode by controlling the first motor 1, the second motor 2, the engine 3, the differential 4, and the drive assembly 8, thereby adjusting the rotational speed of the wheels 100 of the vehicle to meet the different needs of the vehicle under various working conditions.

The above are only optional embodiments of the present disclosure and are not intended to limit the present disclosure. Any modification, equivalent replacement, improvement, etc. made within the principle of the present disclosure shall be included in the protection scope of the present disclosure.

## Claims

1. A hybrid power system, comprising a first motor (1), a second motor (2), an engine (3), a differential (4), a wheel transmission assembly (5), a first planetary-gear transmission assembly (6), a second planetary-gear transmission assembly (7), a drive assembly (8), and a controller; wherein
the wheel transmission assembly (5) is in transmission connection with an input shaft of the differential (4), and an output shaft of the differential (4) is configured for being in transmission connection with wheels (100) of a vehicle;
the first planetary-gear transmission assembly (6) is in transmission connection with the wheel transmission assembly (5);
the second planetary-gear transmission assembly (7) is in transmission connection with the second motor (2), the engine (3), and the first planetary-gear transmission assembly (6);
the drive assembly (8) is connected to the first motor (1), the wheel transmission assembly (5), the first planetary-gear transmission assembly (6), and a braking end (200); and
the controller is electrically connected to the first motor (1), the second motor (2), the engine (3), the differential (4), and the drive assembly (8).

2. The hybrid power system according to claim 1, wherein the wheel transmission assembly (5) comprises a first gear (51), a second gear (52), and a third gear (53), the first gear (51) is matched with an output shaft of the first motor (1) and meshed with the second gear (52), the second gear (52) is coaxially connected to the third gear (53), and the third gear (53) is meshed with the input shaft of the differential (4);
the first planetary-gear transmission assembly (6) comprises a first sun gear (61), a first planetary gear set (62), a first planet carrier (63), and a first ring gear (64), wherein the first sun gear (61), the first planet carrier (63), and the first gear (51) are all coaxially connected, the first planetary gear set (62) is matched with the first planet carrier (63) and meshed with the first sun gear (61), and the first ring gear (64) is configured for being matched with the braking end (200);
the second planetary-gear transmission assembly (7) comprises a second sun gear (71), a second planetary gear set (72), a second planet carrier (73), and a second ring gear (74), wherein the second sun gear (71) is coaxially connected to an output shaft of the second motor (2) and meshed with the second planetary gear set (72), the second planetary gear set (72) is coaxially connected to the second planet carrier (73), the second planet carrier (73) is coaxially connected to an output shaft of the engine (3), and the second ring gear (74) is meshed with the second planetary gear set (72) and coaxially connected to the first planetary gear set (62);
the drive assembly (8) comprises a first clutch (81), a second clutch (82), and a third clutch (83), wherein the first clutch (81) is configured to engage or disengage the first gear (51) with/from the output shaft of the first motor (1), the second clutch (82) is configured to engage or disengage the first planetary gear set (62) with/from the first planet carrier (63), and the third clutch (83) is configured to engage or disengage the first ring gear (64) with/from the braking end (200); and
the controller is electrically connected to the first clutch (81), the second clutch (82), and the third clutch (83).

3. The hybrid power system according to claim 2, wherein the controller is configured to:
in a case where the vehicle is in a start-up mode or a low-speed driving mode and a speed of the vehicle is lower than a first speed threshold, control the first motor (1) to work, control the second motor (2) and the engine (3) to stop working, control the first clutch (81) to engage, and control the second clutch (82) and the third clutch (83) to disengage, so that the first motor (1) drives the wheels (100) of the vehicle to rotate.

4. The hybrid power system according to claim 2, wherein the controller is configured to:
in a case where the vehicle is in a start-up mode or a low-speed driving mode and a speed of the vehicle is not lower than the first speed threshold and lower than a second speed threshold, control the first motor (1) and the second motor (2) to work, control the engine (3) to stop working, control the first clutch (81) and the second clutch (82) to engage, and control the third clutch (83) to disengage, so that the first motor (1) and the second motor (2) jointly drive the wheels (100) of the vehicle to rotate.

5. The hybrid power system according to claim 2, wherein the controller is configured to:
in a case where the vehicle is in a start-up mode or a low-speed driving mode and a speed of the vehicle is not lower than the second speed threshold and lower than a third speed threshold, control the first motor (1) and the second motor (2) to work, control the engine (3) to stop working, control the first clutch (81) and the third clutch (83) to engage, and control the second clutch (82) to disengage, so that the first motor (1) and the second motor (2) jointly drive the wheels (100) of the vehicle to rotate.

6. The hybrid power system according to claim 2, wherein the controller is configured to:
in a case where the vehicle is in a medium-speed driving mode or a high-speed driving mode and a speed of the vehicle is not lower than the third speed threshold and lower than a fourth speed threshold, control the first motor (1), the second motor (2), and the engine (3) to work, control the first clutch (81) and the second clutch (82) to engage, and control the third clutch (83) to disengage, so that the first motor (1), the second motor (2), and the engine (3) jointly drive the wheels (100) of the vehicle to rotate.

7. The hybrid power system according to claim 2, wherein the controller is configured to:
in a case where the vehicle is in a medium-speed driving mode or a high-speed driving mode and a speed of the vehicle is not lower than the fourth speed threshold and lower than a fifth speed threshold, control the first motor (1), the second motor (2), and the engine (3) to work, control the first clutch (81) and the third clutch (83) to engage, and control the second clutch (82) to disengage, so that the first motor (1), the second motor (2), and the engine (3) jointly drive the wheels (100) of the vehicle to rotate.

8. The hybrid power system according to claim 2, wherein the controller is configured to:
in a case where the vehicle is in a coasting mode or a braking energy recovery mode, control the first motor (1), the second motor (2), and the engine (3) to stop working, control the first clutch (81) to engage, and control the second clutch (82) and the third clutch (83) to disengage, so as to recover energy through the first motor (1).

9. The hybrid power system according to claim 2, wherein the controller is configured to:
in a case where the vehicle is in a coasting mode or a braking energy recovery mode, control the first motor (1), the second motor (2), and the engine (3) to stop working, control the first clutch (81) and the second clutch (82) to engage, and control the third clutch (83) to disengage, so as to recover energy through the first motor (1) and the second motor (2).

10. A vehicle, comprising the hybrid power system as defined in any one of claims 1 to 9.
